# EUROPÄISCHE PATENTSCHRIFT

(11) **EP 0 480 148 B1**
(45) Veröffentlichungstag und Bekanntmachung des Hinweises auf die Patenterteilung: **01.02.1995**
(21) Anmeldenummer: 91113975.6
(22) Anmeldetag: 21.08.1991
(51) Int. Cl.: B60T 17/08, F16D 65/24

(54) **Bremszylinder für die Betätigung einer Fahrzeugbremse**
Brake cylinder for the actuation of a vehicle brake
Cylindre de frein pour l'actionnement d'un frein de véhicule

(30) Priorität: 11.10.1990 DE 4032211
(43) Veröffentlichungstag der Anmeldung: 15.04.1992
(73) Patentinhaber: WABCO GmbH, 30453 Hannover (DE)
(72) Erfinder: Kotarra, Bruno, W-3212 Gronau (DE); Ristic, Momcilo, W-3000 Hannover 91 (DE); Mylius, Horst, W-3008 Garbsen 1 (DE); Pohl, Wolfgang, W-3008 Garbsen 6 (DE)
(74) Vertreter: Schrödter, Manfred, Dipl.-Ing.

(56) Entgegenhaltungen:
- EP-A- 0 126 874
- EP-A- 0 204 983
- DE-A- 3 146 846
- GB-A- 2 088 525

## Beschreibung

Die Erfindung betrifft einen Bremszylinder für die Betätigung einer Fahrzeugbremse gemäß dem Oberbegriff des Patentanspruchs 1.

Ein derartiger Bremszylinder ist durch die GB-A-2 088 525 vorbekannt. Der bekannte Bremszylinder besitzt einen Kolben mit einer Druckplatte und einem Kolbenschaft, wobei der Kolben auf einer Membran abgestützt ist und mit der Membran einen Betätigungshub ausführen kann. Der Kolben ist mit der Druckplatte und dem Kolbenschaft als ein einteiliges Formteil ausgebildet. In das freie Ende des Kolbenschaftes ist ein Druckstück eingepreßt, welches eine Ausformung zur Aufnahme eines Betätigungsstößels für die Betätigung einer Bremse aufweist. Der Bremszylinder besitzt ein Führungsrohr, in dem der Kolbenschaft, das Druckstück und der Betätigungsstößel längsbeweglich angeordnet sind.

Der vorbekannte Bremszylinder kann z. B. für die Betätigung von Keilspreizbremsen verwendet werden und ist dann in dieser Eigenschaft an dem nicht drehbaren Teil des Rades, d. h. an der Bremstrommel befestigt. Die Befestigung erfolgt in der Weise, daß das Führungsrohr mit seinem von dem Bremszylinder abgewandten Ende über eine Verschraubung direkt mit der Bremstrommel starr verbunden ist und das Führungsrohr als frei tragendes Verbindungselement zwischen der Bremstrommel und dem Bremszylinder dient.

Die vorteilhafte Eigenschaft der Keilspreizbremse liegt gegenüber herkömmlichen Bremskonstruktionen u. a. in der Reduzierung an Aufwand für das Bremsgestänge und einer damit einhergehenden Minderung der Gestängeelastizität, die üblicherweise als unerwünschter Mehrhub beim Bremsen zu kompensieren ist. Der Bremszylinder stellt jedoch bei der erwähnten Anbringung eine Masse dar, in die Fahrschwingungen vom Rad bzw. von der Achse über das frei tragende Führungsrohr eingeleitet werden. Der konstruktiven Gegebenheit bzw. dem Platzangebot im Bereich von Rad und Bremstrommel entsprechend ist die Baulänge des Führungsrohres ein Mittel zur Überwindung des Abstandes zwischen dem Bremszylinder und der Bremstrommel, derart, daß bei einem breiten Reifen oder Platzmangel infolge konstruktiver Gestaltung der Feder-Aufnahme auf der Achse ein längeres Führungsrohr mit dem Nachteil einer unvorteilhaften Schwerpunktverlagerung notwendig werden kann. Aus Gründen der Zuverlässigkeit und Lebensdauer der Bremseinrichtung besteht daher das Bedürfnis mit konstruktiven Mitteln die schwingende Masse möglichst gering zu halten.

Da der Kolben mit Druckplatte und Kolbenschaft bei diesem bekannten Bremszylinder aus Metall besteht ist er relativ schwer und stellt deshalb auch eine relativ große schwingende Masse dar. Zudem hat der bekannte Bremszylinder den Nachteil, daß einbaubedingte Toleranzen zwischen dem Betätigungsstößel und den Bremsbetätigungselementen nicht ausgeglichen werden können.

Soll ein größerer Abstand zwischen dem Bremszylinder und der Bremstrommel überbrückt werden, so muß bei einem Bremszylinder der im Vorstehenden erwähnten Art neben einem längeren Führungsrohr ein längerer Betätigungsstößel verwendet werden. Die Verwendung eines längeren Stößels hat jedoch den Nachteil, daß es als Folge einer möglichen Auslenkung des Betätigungsstößels aufgrund von Fluchtungsungenauigkeiten zu einer Biegebeanspruchung am Betätigungsstößel und an der Betätigungseinrichtung für die Bremsbacken zu einer einseitigen Lagerbelastung kommen kann.

Der Erfindung liegt daher die Aufgabe zugrunde, den eingangs erwähnten Bremszylinder so zu verbessern, daß dieser im Vergleich zu dem erwähnten Bremszylinder mit geringerem Bauaufwand gestaltet und das Gewicht der im wesentlichen dessen schwingende, ungefederte Masse bildenden Bauteile verringert ist.

Diese Aufgabe wird durch die im Patentanspruch 1 angegebene Ausführung der Erfindung gelöst. Weiterbildungen und vorteilhafte Ausführungsbeispiele der Erfindung sind in den Unteransprüchen angegeben.

Die Erfindung hat den Vorteil, daß in der Mehrzahl vorkommende Abstandsvarianten zwischen Bremszylinder und Bremstrommel mit vorgefertigten Bauteilen mit einer einfachen formschlüssigen Verbindung in der Art eines Baukastensystems unlösbar zusammengefügt werden können.

Weitere Vorteile der Erfindung werden in deren nunmehr folgender Erläuterung anhand von in Zeichnungen dargestellten Ausführungsbeispielen genannt. Es zeigen:
- **Fig.1**: einen Bremszylinder in Längsschnitt,
- **Fig.2**: eine Variante des Bremszylinders gemäß Fig.1,
- **Fig.3**, **4 und 5**: Einzelheiten des Bremszylinders gemäß Fig.1 und Fig.2.

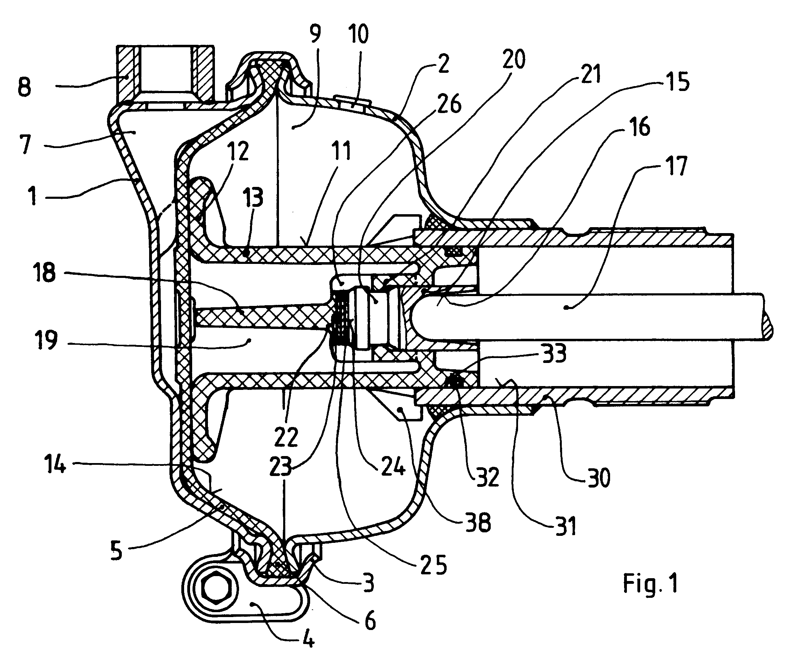

Zu den Figuren 1 bis 5 sind gleiche Bauelemente, soweit deren Wiederholung dem besseren Verständnis dient, mit gleichen Positionsnummern versehen.

Die Fig.1 zeigt einen Bremszylinder mit Gehäusehälften (1) und (2) die mit einem Spannband (3) und einem spannschloß (4) so gegeneinander gehalten sind, daß eine Membran (5) mit ihrem äußeren Rand (6) zwischen den Gehäusehälften (1) und (2) eingespannt ist und dort gleichzeitig als Dichtelement wirkt. Die Gehäusehälfte (1) bildet mit der Membran (5) als bewegliche Wand eine Druckkammer (7) die über einen Druckanschluß (8) mit Druckluft beaufschlagt oder entleert werden kann. Die Gehäusehälfte (2) bildet mit der Membran (5) eine Kammer (9), in der die Membran (5) bei Beaufschlagung mit Druckluft einen Hub ausführen kann, der der Betätigung der Bremse dient. Die Kammer (9) steht über eine Atmungsöffnung (10) mit der Atmosphäre in Verbindung.

Ein Kolben (11), der aus einer Druckplatte (12) und einem Kolbenschaft (13) gebildet ist, liegt mit seiner Druckplatte (12) an der der Druckkammer (7) gegenüberliegenden Seite (14) der Membran (5) an. Der Kolben (11) ist mit einem Druckstück (15) versehen, das eine Ausformung (16) aufweist, die zur Aufnahme eines mit nicht dargestellten Bremsbetätigungselementen in Wirkverbindung stehenden Betätigungsstößels (17) dient. Der Kolben (11) ist zu seiner Versteifung im Innern des Kolbenschaftes (13) mit einem Rippensystem (18, 19) ausgestattet.

Der Kolben (11) ist aus einem einteiligen Formteil aus Kunststoff gebildet. Der Kolben (11) und das Druckstück (15) sind miteinander formschlüssig verbunden. Die formschlüssige Verbindung wird durch eine Schnappverbindung (20, 21) bewirkt, die aus einer ringförmigen Vertiefung (20) des Druckstückes (15) und sich in Richtung auf die Vertiefung (20) sich erstreckende Vorsprünge (21) im Innern des Kolbenschaftes (13) gebildet ist. Die Vorsprünge (21) bilden einen festen Bestandteil des Kolbenschaftes (13) und sind zungenförmig ausgebildet. Unter vorteilhafter Ausnutzung der Elastizität des Kunststoffes gestattet die Schnappverbindung (20, 21) ein unlösbares Zusammenfügen von Kolben (11) und Druckstück (15) mit einfachen Mitteln und geringerem Aufwand.

Der Kolbenschaft (13) weist einen aus dem Rippensystem (18, 19) hervorgehenden Vorsprung (22)auf, der dem Druckstück (15) in Richtung auf den Kolbenschaft (13) zu als Anschlag (22) dient. Der Anschlag (22) und die Schnappverbindung (20, 21) sind so ausgebildet und zueinander angeordnet, daß zwischen den einander zugeordneten Stirnflächen (23, 24) des Anschlages (22) und des Druckstückes (15) ein Spiel vorhanden ist. Dieses Spiel dient unter Verwendung von spielausgleichenden Mitteln zum Ausgleich von einbaubedingten Toleranzen zwischen dem Betätigungsstößel (17) und dem Bremsbetätigungselementen. Zum Ausgleich des Spiels sind Unterlegscheiben (25)vorgesehen, die zwischen den Stirnflächen (23, 24) des Anschlages (22) und des Druckstückes (15) in einer Ausformung (26) des Kolbenschaftes (13) eingelegt werden.

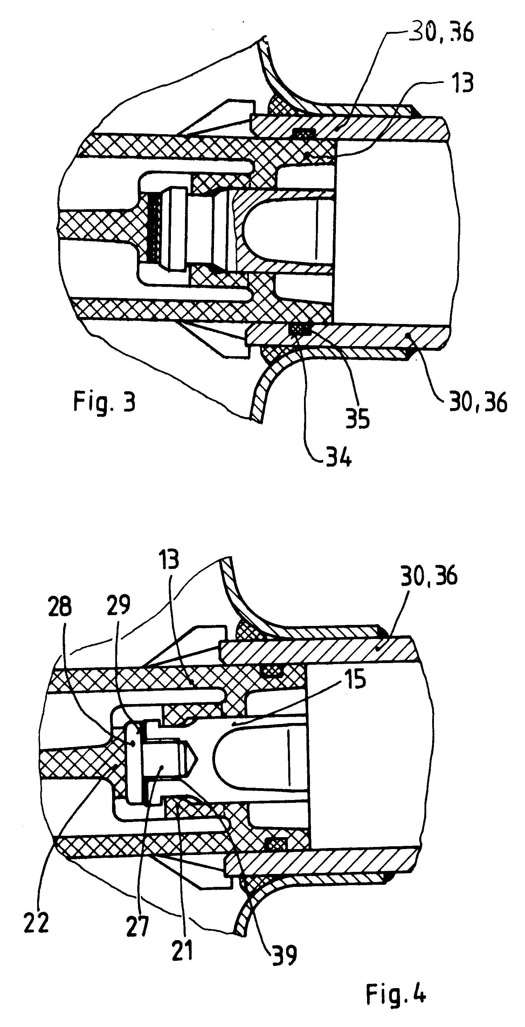

In einem anderen Ausführungsbeispiel gemäß Fig.4 ist zum Ausgleich des Spiels zwischen dem Anschlag (22) und dem Druckstück (15) eine Schraube (27) vorgesehen, mit einem entsprechend ausgeformten Kopf (28), der so ausgebildet ist, daß der dem Druckstück (15) als Anschlagfläche dienen kann. Die Fixierung der Schraube unter Berücksichtigung des auszufüllenden Spiels kann mit Unterlegscheiben (29) unter den Schraubenkopf (28), durch unterschiedliche vorgefertigte Dicken des Schraubenkopfes (28) oder mit Klebemitteln, die das Gewinde festsetzen, erfolgen. Das Ausführungsbeispiel gemäß Fig.4 bietet hinsichtlich einer Lagerhaltung von Montageelementen den Vorteil, daß die spielausgleichenden Mittel mit dem Druckstück (15) als vorgefertigte Baugruppe fest verbunden sein können.

Ein Führungsrohr (30), gemäß Fig.1, ist mit der Gehäusehälfte (2) starr verbunden und dient als tragendes Element zur Verbindung des Bremszylinders mit der Bremstrommel. Das Führungsrohr (30) hat einen Innenrohrbereich der als Gleitfläche (31) ausgebildet ist. Der Kolbenschaft (13) ist bezüglich des Führungsrohres (30) so ausgebildet, daß er direkt gleitend im Bereich der Gleitfläche (31) gelagert ist. In dem Gleitbereich von Kolbenschaft (13) und Führungsrohr (30) ist eine Dichtung (32) angeordnet, mit dem der Kolbenschaft (13) gegenüber dem Führungsrohr (30) abgedichtet ist. Der Kolbenschaft (13) hat in seinem in dem Führungsrohr gleitenden Bereich eine ringförmige Vertiefung (33) die zur Aufnahme der Dichtung (32) dient. Die Fig.3 zeigt ein anderes Ausführungsbeispiel, in dem das Führungsrohr (30) in seinem mit dem Kolbenschaft (13) gleitenden Bereich eine ringförmige Vertiefung (34) aufweist, in der eine Dichtung (35) angeordnet ist.

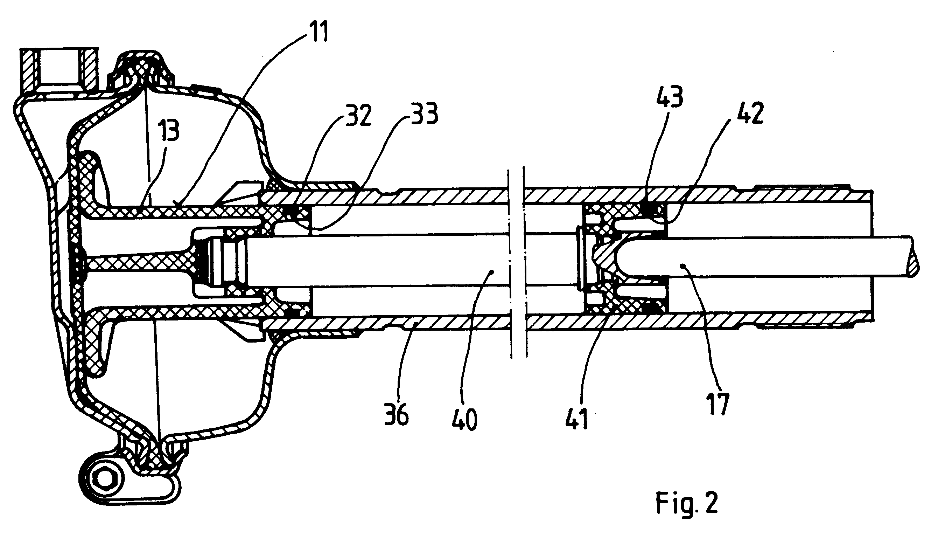

Gemäß der Fig.1 und 2 ist das Führungsrohr (30) bzw. (36) an seinem dem Kolben (11) zugewandten Ende mit einem Abstreifring (37) versehen, mit einer Dichtlippe (38), die den Kolbenschaft (13) gleitend umschließt. Mit der Dichtlippe (38) soll der in dem Führungsrohr (30) gleitende Bereich des Kolbenschaftes (13) von Verunreinigungen freigehalten werden, die evtl. durch die Atmungsöffnung (10) in die Kammer (9) eindringen könnten.

Die Fig.2 zeigt einen Bremszylinder der dem der Fig.1 bis auf die Länge des Führungsrohres entspricht. Mit einem solchen verlängerten Führungsrohr (39) soll ein größerer Abstand zwischen dem Bremszylinder und der Bremstrommel überbrückt werden. Als Folge davon sind auch die zwischen dem Kolben (11) und der Betätigungseinrichtung für die Bremsbacken angeordneten Übertragungselemente zu verlängern. Es böte sich an, den Betätigungsstößel (17) zur Überbrückung der größeren Distanz entsprechend zu verlängern. Dies würde jedoch im Falle von schwer zu kontrollierenden Fluchtungsungenauigkeiten des Betätigungsstößels (17) bezüglich seiner Betätigungsachse unerwünschte Kraftkomponenten erzeugen, die am Betätigungsstößel (17) infolge seiner Auslenkung zu einer Biegebeanspruchung und an der Betätigungseinrichtung für die Bremsbacken zu einer eiseitigen Lagerbelastung führen würden. Aus den vorstehenden Gründen bleibt der Betätigungsstößel (17)auf ein für diese Zwecke günstiges Längenmaß beschränkt.

Mit einem verlängerten Druckstück (40) dessen Verbindung mit dem Kolben (11) der das Druckstück (15) gemäß Fig.1 entspricht, und einen Führungsteil (41) mit dem das verlängerte Druckstück (40) in dem Führungsrohr (39) geführt ist, ist eine größere Distanz mit der erforderlichen Fluchtungsgenauigkeit der Übertragungselemente erreichbar. Das Führungsteil (41) ist mit einer ringförmigen Vertiefung (42) versehen, in dem eine Dichtung (43) gelagert ist, welche für eine gleitende Abdichtung zwischen dem Führungsrohr (39) und dem Führungsteil (41) im Sinne einer Schmutzabweisung im Gleitbereich des Führungsteiles (41) wirksam ist. Das Führungsteil (41) ist formschlüssig mit dem Druckstück (40) verbunden.

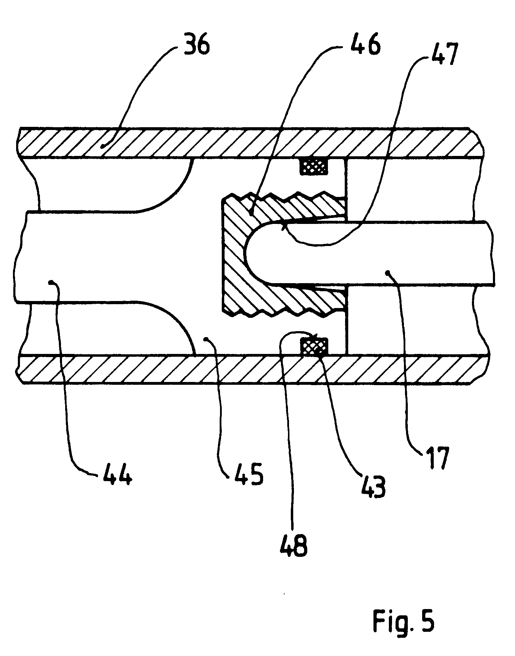

Zur Einsparung von Gewicht und damit einhergehender Reduzierung der zur Schwingung neigenden ungefederten Masse des Bremszylinders kann das Druckstück (41) in vorteilhafter Weise aus Kunststoff bestehen. Die Fig.5 zeigt einen Teil eines Druckstückes (44) das bezüglich der Befestigung mit dem Kolben (11) den Druckstücken (15) der Fig.1 und (40) der Fig.2 entsprechen soll. Ein Führungsteil (45), das zur Führung des Druckstückes (44) im Führungsrohr (39) dient, ist mit dem übrigen Teil des Druckstückes (44) als einteiliges Kunststoff-Formteil ausgebildet. Zur Übertragung der Betätigungskraft von dem Druckstück (44) auf den Betätigungsstößel (17) ist das Führungsteil (45) mit einem als Einsatz (46) dienenden Teil mit einer Ausformung (47) zur Aufnahme des Betätigungsstößels (17) versehen.

Der Einsatz (46) ist entsprechend seines Verwendungszweckes aus einem Teil mit hoher Verschleißfestigkeit gebildet.

Der Einsatz (46) kann in dem Führungsteil (45) mit einer Preßpassung gehalten sein. Bei einer Ausbildung des Druckstückes (44) und des Führungsteils (45) als einteiliges Kunststoff-Formteil bietet sich das Eingießen des Einsatzes (46) in das Führungsteil (45) als vorteilhafte Lösung an. Eine in das Führungsteil (45) ringförmig eingeformte Vertiefung (48) dient zur Aufnahme der Dichtung (43).

## Patentansprüche

1. Bremszylinder für die Betätigung einer Fahrzeugbremse, mit folgenden Merkmalen:
a) es ist eine mit einer beweglichen Membran verschlossene Druckkammer vorgesehen, die zur Bremsbetätigung mit einem Druckmittel beaufschlagbar ist;
b) es ist ein als einteiliges Formteil ausgebildeter Kolben (11) mit einer Druckplatte (12) und einem Kolbenschaft (13) vorgesehen, der auf der Membran abgestützt ist und mit der Membran einen Bremsbetätigungshub ausführen kann;
c) der Kolbenschaft (13) ist an seinem freien Ende mit einem Druckstück (15, 40, 44) versehen, mit einer Ausformung, die zur Aufnahme eines Betätigungsstößels für die Betätigung der Bremse dient;
d) der Bremszylinder weist ein Führungsrohr (30, 36) auf, in dem der Kolbenschaft (13), das Druckstück (15, 40, 44) und der Betätigungsstößel längsbeweglich angeordnet sind;
e) der Kolbenschaft (13)ist direkt gleitend in dem Führungsrohr (30, 36) geführt;
f) es sind Mittel vorgesehen, mit denen der Kolbenschaft (13) und das Druckstück (15, 40, 44) formschlüssig miteinander verbunden sind;
gekennzeichnet durch die folgenden Merkmale:
g) der Kolben (11) mit seiner Druckplatte (12) und seinem Kolbenschaft (13) ist aus einem einteiligen Kunststoff-Formteil gebildet;
h) die Mittel zur formschlüssigen Verbindung sind aus einer zwischen dem Kolbenschaft (13) und dem Druckstück (15, 40, 44) angeordneten Schnappverbindung (20, 21) gebildet.

2. Bremszylinder nach Anspruch 1, dadurch gekennzeichnet, daß in dem Gleitbereich von Kolbenschaft (13) und Führungsrohr (30, 36) eine Dichtung (32) angeordnet ist, mit dem der Kolbenschaft (13) gegenüber dem Führungsrohr (30, 36) abgedichtet ist.

3. Bremszylinder nach Anspruch 2, dadurch gekennzeichnet, daß der Kolbenschaft (13) in seinem in dem Führungsrohr (30, 36) gleitenden Bereich eine ringförmige Vertiefung (33) aufweist, die zur Aufnahme der Dichtung (32) dient.

4. Bremszylinder nach Anspruch 2, dadurch gekennzeichnet, daß das Führungsrohr (30, 36) in seinem mit dem Kolbenschaft (13) gleitenden Bereich eine ringförmige Vertiefung (34) aufweist, die zur Aufnahme der Dichtung (35) dient.

5. Bremszylinder nach Anspruch 1, dadurch gekennzeichnet, daß die Schnappverbindung (20, 21) aus einer ringförmigen Vertiefung (20) des Druckstückes (15, 40, 44) und aus in Richtung auf die Vertiefung (20) sich erstreckende Vorsprünge (21) des Kolbenschaftes (13) gebildet ist.

6. Bremszylinder nach Anspruch 1, dadurch gekennzeichnet, daß der Kolben (11) einen Anschlag (22) aufweist, der zur stirnseitigen Anlage des Druckstückes (15, 40, 44) bei eingerasteter Schnappverbindung (20, 21) dient.

7. Bremszylinder nach den Ansprüchen 1, 5 und 6, dadurch gekennzeichnet, daß der Anschlag (22) und die Schnappverbindung (20, 21) so ausgebildet und zueinander angeordnet sind, daß zwischen den einander zugeordneten Stirnseiten (23, 24) des Anschlages (22) und des Druckstückes (15, 40, 44) ein Spiel vorhanden ist.

8. Bremszylinder nach Anspruch 7, dadurch gekennzeichnet, daß Mittel zum Ausgleich des Spiels vorgesehen sind.

9. Bremszylinder nach Anspruch 8, dadurch gekennzeichnet, daß die Mittel zum Ausgleich des Spiels Unterlegscheiben (25) sind.

10. Bremszylinder nach Anspruch 7, dadurch gekennzeichnet, daß die Mittel zum Ausgleich des Spiels aus einer in Längsrichtung des Druckstückes (15, 40) eingedrehten Schraube (27) und einem Gewinde (39) im Druckstück (15, 40) bestehen.

11. Bremszylinder nach Anspruch 1, dadurch gekennzeichnet, daß das Druckstück (15, 40, 44) in dem Führungsrohr (30, 36) längsbeweglich geführt ist.

12. Bremszylinder nach Anspruch 11, dadurch gekennzeichnet, daß zur längsbeweglichen Führung des Druckstückes (40) in dem Führungsrohr (36) das Druckstück (40) mit einem Führungsteil (41) formschlüssig verbunden ist.

13. Bremszylinder nach Anspruch 12, dadurch gekennzeichnet, daß das Führungsteil (41) eine ringförmige Vertiefung (42) mit einer Dichtung (43) aufweist, mit der das Führungsteil (41) gegenüber dem Führungsrohr (36) abgedichtet ist.

14. Bremszylinder nach Anspruch 11, dadurch gekennzeichnet, daß das Druckstück (44) aus einem Kunststoff-Formteil gebildet ist und eine Ausformung (47) aufweist, die zur Aufnahme des Betätigungsstößels (17) für die Betätigung der Bremse dient.

15. Bremszylinder nach Anspruch 14, dadurch gekennzeichnet, daß die Ausformung (47) aus einem Teil (46) mit hoher Verschleißfestigkeit gebildet ist, welches mit dem dem Betätigungsstößel (17) zugewandten Ende des Druckstückes (44) verbunden ist.

16. Bremszylinder nach Anspruch 15, dadurch gekennzeichnet, daß das die Ausformung (47) bildende Teil (46) in das Druckstück (44) eingegossen ist.

17. Bremszylinder nach wenigstens einem der vorhergehenden Anspruche, dadurch gekennzeichnet, daß das Führungsrohr (30, 36) an seinem dem Kolben (11) zugewandten Ende mit einem Abstreifring (37) versehen ist, mit einer Dichtlippe (38), die den Kolbenschaft (13) gleitend umschließt.

18. Bremszylinder nach Anspruch 14, dadurch gekennzeichnet, daß das Druckstück (44) ein der Führung des Druckstückes (44) im Führungsrohr (36) dienendes Führungsteil (45) aufweist und das Druckstück (44) und das Führungsteil (45) aus einem einteiligen Kunststoff-Formteil gebildet sind.

19. Bremszylinder nach Anspruch 18, dadurch gekennzeichnet, daß das Führungsteil (45) eine ringförmig eingeformte Vertiefung (48) zur Aufnahme der Dichtung (43) aufweist.

## Claims

1. A brake cylinder for actuating a vehicle brake, having the following features:
a) there is provided a pressure chamber which is closed by a movable diaphragm and is arranged to be pressurized with a pressure medium to actuate the brake;
b) a piston (11) in the form of a one-piece shaped part having a pressure plate (12) and a piston shank (13) is provided, and is supported on the diaphragm and is able to perform with the diaphragm a brake-actuating stroke;
c) the piston shank (12) is provided at its free end with a thrust piece (15, 40, 44) having a recess that serves to receive an actuating ram for actuation of the brake;
d) the brake cylinder has a guide tube (30, 36) in which the piston shank (13), the thrust piece (15, 40, 44) and the actuating ram are arranged so as to move longitudinally;
e) the piston shank (13) is guided directly in and in sliding contact with the guide tube (30, 36);
f) means are provided with which the piston shank (13) and the thrust piece (15, 40, 44) engage one another with an interlocking fit;
characterized by the following features:
g) the piston (11) with its thrust plate (12) and its piston shank (13) is formed from a one-piece shaped plastics part;
h) the means for effecting the interlocking engagement are formed from a snap-action connection (20, 21) arranged between the piston shank (13) and the thrust piece (15, 40, 44).

2. A brake cylinder according to claim 1, characterized in that a seal (32), with which the piston shank (13) is sealed with respect to the guide tube (30, 36) is arranged in the sliding region of the piston shank (13) and the guide tube (30, 36).

3. A brake cylinder according to claim 2, characterized in that in its region sliding in the guide tube (30, 36) the piston shank (13) has an annular recess (33) which serves to receive the seal (32).

4. A brake cylinder according to claim 2, characterized in that in its region sliding with the piston shank (13) the guide tube (30, 36) has an annular recess (34) which serves to receive the seal (35).

5. A brake cylinder according to claim 1, characterized in that the snap-action connection (20, 21) is formed from an annular recess (20) of the thrust piece (15, 40, 44) and from projections (21) of the piston shank (13) extending towards the recess (20).

6. A brake cylinder according to claim 1, characterized in that the piston (11) has a stop (22) which serves as abutment for the end face of the thrust piece (15, 40, 44) when the snap-action connection (20, 21) has snapped in.

7. A brake cylinder according to claims 1, 5 and 6, characterized in that the stop (22) and the snap-action connection (20, 21) are so constructed and arranged in relation to one another that there is a clearance between the associated end faces (23, 24) of the stop (22) and the thrust piece (15, 40, 44).

8. A brake cylinder according to claim 7, characterized in that means are provided to compensate for the clearance.

9. A brake cylinder according to claim 8, characterized in that the means for compensating for the clearance are washers (25).

10. A brake cylinder according to claim 7, characterized in that the means for compensating for the clearance comprise a screw (27) screwed in in the longitudinal direction of the thrust piece (15, 40) and a thread (39) in the thrust piece (15, 40).

11. A brake cylinder according to claim 1, characterized in that the thrust piece (15, 40, 44) is guided in the guide tube (30, 36) so as to move longitudinally.

12. A brake cylinder according to claim 11, characterized in that, for the longitudinal guidance of the thrust piece (40) in the guide tube (36), the thrust piece (40) is engaged with a guide part (41) in an interlocking fit.

13. A brake cylinder according to claim 12, characterized in that the guide part (41) has an annular recess (42) with a seal (43) with which the guide part (41) is sealed with respect to the guide tube (36).

14. A brake cylinder according to claim 11, characterized in that the thrust piece (44) is formed from a shaped plastics part and has a recess (47) which serves to receive the actuating ram (17) for actuating the brake.

15. A brake cylinder according to claim 14, characterized in that the recess (47) is formed from a part (46) of high wear resistance which is connected to the end of the thrust piece (44) facing the actuating ram (17).

16. A brake cylinder according to claim 15, characterized in that the part (46) forming the recess (47) is cast into the thrust piece (44).

17. A brake cylinder according to at least one of the preceding claims, characterized in that the guide tube (30, 36) is provided at its end facing the piston (11) with a scraper ring (37) having a sealing lip (38) which surrounds the piston shank (13) so as to slide.

18. A brake cylinder according to claim 14, characterized in that the thrust piece (44) has a guide part (45) serving to guide the thrust piece (44) in the guide tube (36) and the thrust piece (44) and the guide part (45) are formed from a one-piece shaped plastics part.

19. A brake cylinder according to claim 18, characterized in that the guide part (45) has an annular recess (48) shaped therein to receive the seal (43).

## Revendications

1. Cylindre de frein pour l'actionnement d'un frein de véhicule, présentant les caractéristiques suivantes :
a) il est prévu une chambre de pression fermée par une membrane mobile, qui peut être sollicitée par un fluide sous pression pour l'actionnement du frein ;
b) il est prévu un piston (11) réalisé en tant que composant en une seule pièce, comportant un plateau de pression (12) et un corps de piston (13) qui s'appuie contre la membrane et qui peut effectuer une course d'actionnement avec la membrane ;
c) le corps de piston (13) est pourvu sur son extrémité libre d'un élément de pression (15, 40, 44), comportant un évidement qui sert à la réception d'un poinçon d'actionnement pour l'actionnement du frein ;
d) le cylindre de frein présente un tube de guidage (30, 36) dans lequel sont agencés de façon mobile en direction longitudinale le corps de piston (13), l'élément de pression (15, 40, 44) et le poinçon d'actionnement ;
e) le corps de piston (13) est guidé de façon directement coulissante dans le tube de guidage (30, 36) ;
f) il est prévu des moyens grâce auxquels le corps de piston (13) et l'élément de pression (15, 40, 44) sont reliés l'un à l'autre par coopération de formes ;
caractérisé en ce que :
g) le piston (11) est réalisé avec son plateau de pression (12) et son corps de piston (13) sous la forme d'un composant moulé en matière plastique en une seule pièce ;
h) les moyens pour la liaison par coopération de formes sont formés d'un assemblage à enclenchement (20, 21) agencé entre le corps de piston (13) et l'élément de pression (15, 40, 44).

2. Cylindre de frein selon la revendication 1, caractérisé en ce que dans la région de coulissement du corps de piston (13) et du tube de guidage (30, 36) il est prévu un joint (32) au moyen duquel le corps de piston (13) est étanché par rapport au tube de guidage (30, 36).

3. Cylindre de frein selon la revendication 2, caractérisé en ce que le corps de piston (13) présente dans sa région de coulissement dans le tube de guidage (30, 36) un creux annulaire (33) qui sert à la réception du joint (32).

4. Cylindre de frein selon la revendication 2, caractérisé en ce que le tube de guidage (30, 36) présente dans sa région de coulissement vis-à-vis du corps de piston (13) un creux annulaire (34) qui sert à la réception du joint (35).

5. Cylindre de frein selon la revendication 1, caractérisé en ce que l'assemblage à enclenchement (20, 21) est formé par un creux annulaire (20) de l'élément de pression (15, 40, 44) et par des saillies (21) du corps de piston (13) qui s'étendent en direction du creux (20).

6. Cylindre de frein selon la revendication 1, caractérisé en ce que le piston (11) présente une butée (22) qui sert à l'appui du côté frontal de l'élément de pression (15, 40, 44) lorsque l'assemblage à enclenchement (20, 21) est encliqueté.

7. Cylindre de frein selon les revendications 1, 5 et 6, caractérisé en ce que la butée (22) et l'assemblage à enclenchement (20, 21) sont réalisés et agencés l'un par rapport à l'autre de telle sorte qu'il existe un jeu entre les faces frontales (23, 24) orientées l'une vers l'autre de la butée (22) et de l'élément de pression (15, 40, 44).

8. Cylindre de frein selon la revendication 7, caractérisé en ce qu'il est prévu des moyens pour compenser le jeu.

9. Cylindre de frein selon la revendication 8, caractérisé en ce que les moyens pour compenser le jeu sont des rondelles (25).

10. Cylindre de frein selon la revendication 7, caractérisé en ce que les moyens pour compenser le jeu sont constitués par une vis (27) serrée en direction longitudinale de l'élément de pression (15, 40), et par un taraudage (39) dans l'élément de pression (15, 40).

11. Cylindre de frein selon la revendication 1, caractérisé en ce que l'élément de pression (15, 40, 44) est guidé de façon mobile en direction longitudinale dans le tube de guidage (30, 36).

12. Cylindre de frein selon la revendication 11, caractérisé en ce que, pour le guidage mobile en direction longitudinale de l'élément de pression (40) dans le tube de guidage (36), l'élément de pression (40) est relié par coopération de formes à un élément de guidage (41).

13. Cylindre de frein selon la revendication 12, caractérisé en ce que l'élément de guidage (41) présente un creux annulaire (42) comportant un joint (43) au moyen duquel l'élément de guidage (41) est étanché par rapport au tube de guidage (36).

14. Cylindre de frein selon la revendication 11, caractérisé en ce que l'élément de pression (44) est formé d'un composant moulé en matière plastique et présente un évidement (47) qui sert à la réception du poinçon d'actionnement (17) pour l'actionnement du frein.

15. Cylindre de frein selon la revendication 14, caractérisé en ce que l'évidement (47) est formé d'un élément (46) ayant une résistance élevée à l'usure, qui est relié à l'extrémité de l'élément de pression (44) orientée vers le poinçon d'actionnement (17).

16. Cylindre de frein selon la revendication 15, caractérisé en ce que l'élément (46) formant l'évidement (47) est coulé dans l'élément de pression (44).

17. Cylindre de frein selon l'une au moins des revendications précédentes, caractérisé en ce que le tube de guidage (30, 36) est pourvu sur son extrémité orientée vers le piston (11) d'une bague de raclage (37) avec une lèvre d'étanchéité (38) qui entoure de façon coulissante le corps de piston (13).

18. Cylindre de frein selon la revendication 14, caractérisé en ce que l'élément de pression (44) présente un élément de guidage (45) qui sert au guidage de l'élément de pression (44) dans le tube de guidage (36), et en ce que l'élément de pression (44) et l'élément de guidage (45) sont formés par un composant moulé en matière plastique en une seule pièce.

19. Cylindre de frein selon la revendication 18, caractérisé en ce que l'élément de guidage (45) présente un creux (48) formé de façon annulaire pour la réception du joint (43).
